# EUROPEAN PATENT APPLICATION

(11) **EP 2 053 070 A1**
(43) Date of publication of application: **29.04.2009**
(21) Application number: 06781970.6
(22) Date of filing: 28.07.2006
(51) Int. Cl.: C08G 61/02, C23C 16/44

(54) **APPARATUS FOR CHEMICAL VAPOR DEPOSITION AND METHOD OF CHEMICAL VAPOR DEPOSITION**

(71) Applicant: Daisankasei Co., Ltd., Tokyo 103-8410 (JP); Kisco Ltd., Tokyo 103-8410 (JP)
(72) Inventor: MOCHIZUKI, Tsutomu, Ichihara-shi Chiba 290-0045 (JP); INOUE, Takashi, Ichihara-shi Chiba 290-0045 (JP); UETAKE, Kazuyoshi, Tokyo 103-8410 (JP)
(74) Representative: Marchant, Michael John
(86) International application number: PCT/JP2006/315060
(87) International publication number: WO 2008/012921

(57) **Abstract**

A chemical vapor deposition apparatus includes a charging section 10 for charging a feedstock material for vapor deposition, a decomposition oven 2 for decomposing a feedstock material for vapor deposition, an opening/closing valve 4 for interconnecting the charging section 10 and the decomposition oven 2, and a polymerization section 3 for polymerizing the feedstock material decomposed by the decomposition oven for depositing a coating film on the surface of a substrate. The feedstock material for vapor deposition charged into the charging section 10 is vaporized, and the so vaporized feedstock material is delivered to the decomposition oven 2 by opening the opening/closing valve 4 to deposit the coating film.

## Description

### Technical Field

This invention relates to an apparatus and a method for chemical vapor deposition in which a polymer is produced on polymerization on a surface of a substrate to deposit a coating film thereon.

### Background Art

In coating a semiconductor, an electronic component, aerospace equipment or medical equipment, etc., there has been widely used a method of depositing a polymer film on a substrate surface by chemical vapor deposition referred to below as vapor deposition.
The related method for vapor deposition of a coating film is now described in detail, taking an example of a film of a polyparaxylylene derivative which may be obtained on ring-opening polymerization of (2,2)- paracyclophan and/or its derivative, referred to below as (2,2)- paracyclophan derivative.
This (2,2)- paracyclophan derivative is represented by the following structural formula (I): 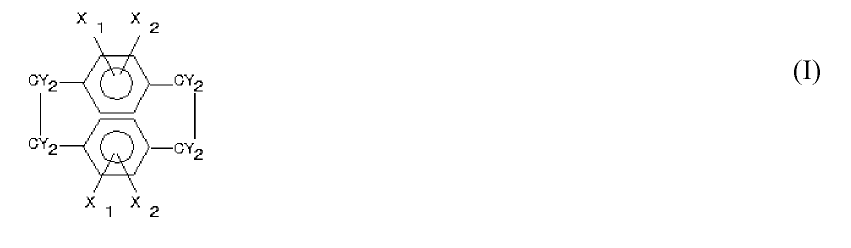 where X₁ and X₂ denote hydrogen, lower alkyl groups, amino groups, formyl groups or halogen atoms, and Y denotes hydrogen or a halogen atom. X₁ and X₂ may be the same or different, while Y may be all the same element or part of Y may be different elements.
In a method for vapor deposition of a film of the polyparaxylylene derivative, a (2,2)- paracyclophan derivative which is a feedstock material for vapor deposition, is vaporized under reduced pressure to generate a vaporized material. This vaporized material is decomposed at an elevated temperature to generate xylylene radicals represented by the following structural formula (II): 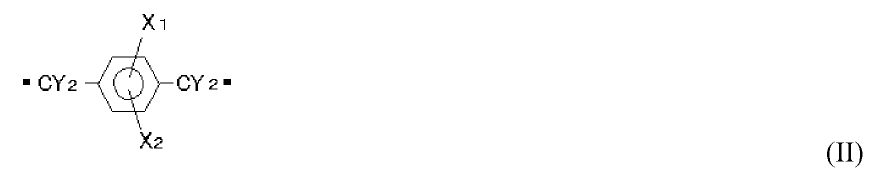 where X₁ and X₂ denote hydrogen, lower alkyl groups, amino groups, formyl groups or halogen atoms, and Y denotes hydrogen or a halogen atom. X₁ and X₂ may be the same or different, while Y may be all the same element or part of Y may be different elements.
The generated xylylene radicals are polymerized on a surface of an article to be coated, referred to below as a substrate, to generate a coating film formed of a polymer represented by the following structural formula (III): 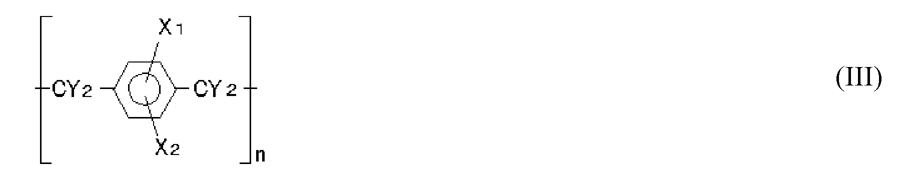 where X₁ and X₂ denote hydrogen, lower alkyl groups, amino groups, formyl groups or halogen atoms, and Y denotes hydrogen or a halogen atom. X₁ and X₂ may be the same or different, while Y may be all the same element or part of Y may be different elements, and n denotes the polymerization degree.
This polyparaxylylene derivative may be synthesized by the following reaction formula (I): 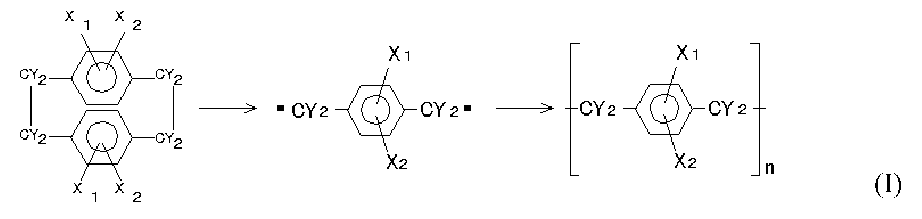 where X₁ and X₂ denote hydrogen, lower alkyl groups, amino groups, formyl groups or halogen atoms, and Y denotes hydrogen or a halogen atom. X₁ and X₂ may be the same or different, while Y may be all the same element or part of Y may be different elements, and n denotes the polymerization degree.

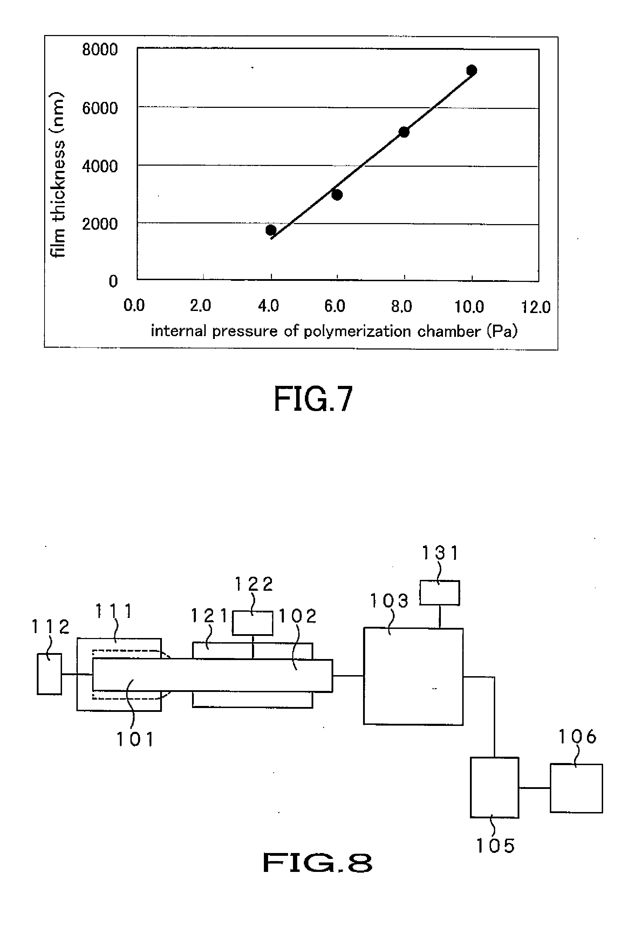

Fig.8 shows a constitution of a related vapor deposition apparatus used for vapor deposition of the aforementioned polyparaxylylene derivative. This vapor deposition apparatus is made up of a vaporization section 101, a decomposition oven 102 and a polymerization chamber 103, interconnected in cascade. The polymerization chamber 103 is connected via a piping and a cooling trap 105 to a vacuum pump 106.
There are provided heating ovens 111, 121 on outer sides of the vaporization section 101 and the decomposition oven 102, while there are respectively provided temperature sensors 112 and 122 between the heating oven 111 and the vaporization section 101 and between the heating oven 121 and the decomposition oven 102. The polymerization chamber 103 is provided with a pressure sensor 131. The vaporization section 101 and the decomposition oven 102 are formed by a sole one-piece piping. The vaporization section 101 may be slightly larger in diameter than the decomposition section as indicated by a broken line in Fig.8, if so desired.
The operation of an apparatus for vapor-depositing a film of the polyparaxylylene derivative may be carried out by process steps (1) to (6) below:
(1) A vessel formed by an aluminum foil or a ceramic into which has been weighed a (2,2)- paracyclophan derivative is introduced into the vaporization section 101 shown in Fig.8. This operation is referred to below as 'charging'. The amount of (2,2)- paracyclophan derivative, referred to below as 'feedstock material for vaporization' or simply as 'feedstock material', is empirically determined from the thickness of a coating film desired for the substrate.
(2) The inside of the vaporization apparatus is evacuated by the vacuum pump 106 to the vacuum of the order of 0.1 to 2 Pa, as measured by the pressure sensor 131 provided within the polymerization chamber 103. The temperature within the decomposition oven 102 shown in Fig.8 is maintained at ca. 600°C to 800°C, as measured by the temperature sensor 122.
(3) In this state, the temperature within the vaporization section 101 is increased gradually to sublimate the feedstock material for vaporization. Although the pressure within the polymerization chamber 103 measured by the pressure sensor 131 is increased gradually at this time, the temperature within the vaporization section 101 is adjusted so that the vacuum within the chamber is on the order of 10 Pa at the maximum.
(4) The vaporized feedstock material is transported to the decomposition oven 102, where xylylene radicals represented by the structural formula (II) are generated by thermal decomposition.
(5) The generated xylylene radicals are transported into the polymerization chamber 103, and polymerized on a surface of the substrate placed beforehand within the polymerization chamber 103, thereby depositing a coating film formed of a polymer. The inside of the polymerization chamber 103 is generally maintained at ambient temperature. The substrate may be cooled if so desired.
(6) The vapor deposition process comes to a close when the feedstock material for deposition has been consumed entirety. The apparatus for vapor deposition then is cooled and the pressure in the vacuum system is restored to ambient pressure to take out the substrate. Whether the feedstock material for deposition has been consumed is verified from the value of the pressure sensor 131 provided within the polymerization chamber 103. When the feedstock material for deposition has become depleted, the vacuum shifts toward the high vacuum side down to approximately the same order of vacuum as that before vapor deposition.
   The film of the polyparaxylylene derivative generated by this method for vaporization is superior in insulating property, resistance to chemicals, gas barrier property, biocompatibility, etc. Hence, the Applicants of the present application use the film of the polyparaxylylene derivative extensively for coating for a semiconductor, electronic components, aerospace equipment, medical equipment, etc (see Japanese Patent Application Laid-Open No. 2004-83661, for instance).

### Disclosure of the Invention

### Problem to be solved by the Invention

However, the related method for vapor deposition suffers from the problem that vapor-depositing a coating film is a time-consuming operation. For this reason, in the field of the semiconductor or the electronic components where extreme importance is attached to the manufacture time per batch operation (tact time) to suppress the manufacturing cost, the related vapor deposition method is not put to industrial application in many cases, even though the properties of the coating film are up to requirements for use.
It is noted that the operations of charging the feedstock material for deposition into the vaporization section 101 and raising the temperature within the vaporization section 101 need to be repeated from one batch coating operation to the next. This accounts for the protracted vapor deposition operation. In other words, the time for charging the feedstock material for deposition into the vaporization section 101 and the time for raising the temperature to the sublimation temperature in the vaporization section 101 need to be preserved for each batch operation.
For example, if a thin film not larger than 1 µm is desired in the field of semiconductors, the time for charging the feedstock material for deposition into the vaporization section 101 and the time for raising the temperature to the sublimation temperature in the vaporization section 101 account for a significant portion in the total time desired for depositing the coating film.
Despite the fact that the related method for vapor deposition of the coating film has generally been recognized to be time-consuming, no attempts have so far been made to improve the situation.
It is therefore an object of the present invention to eliminate the problem of the related art and to provide an apparatus and a method for chemical vapor deposition whereby a coating film may be deposited within a short time on a substrate.

### Means for solving the Problem

In one aspect, an embodiment of the present invention provides an apparatus for chemical vapor deposition including a charging section for charging a feedstock material for vapor deposition, a decomposition oven for decomposing the feedstock material, an opening/closing valve for interconnecting the charging section and the decomposition oven, and a polymerization section for polymerizing the feedstock material decomposed in the decomposition oven for depositing a coating film on a surface of a substrate. The feedstock material charged into the charging section is vaporized and the vaporized feedstock material is led into the decomposition oven by opening the opening/closing valve for depositing the coating film.
In another aspect, an embodiment of the present invention provides an apparatus for chemical vapor deposition including a charging section for charging a feedstock material for vapor deposition, a decomposition oven for decomposing the feedstock material, an opening/closing valve for interconnecting the charging section and the decomposition oven, and a polymerization section for polymerizing the feedstock material decomposed in the decomposition oven for depositing a coating film on a surface of a substrate. The feedstock material charged into the charging section is vaporized, and the vaporized feedstock material is supplied into the decomposition oven in a manner controlled by the opening/closing valve to control the film thickness of the coating film.
In a further aspect, an embodiment of the present invention provides a method for chemical vapor deposition by an apparatus for chemical vapor deposition, in which the apparatus for chemical vapor deposition includes a charging section for charging a feedstock material for vapor deposition, a decomposition oven for decomposing the feedstock material, an opening/closing valve for interconnecting the charging section and the decomposition oven, and a polymerization section for polymerizing the feedstock material decomposed in the decomposition oven for depositing a coating film on a surface of a substrate. The method of an embodiment of the present invention includes the steps of charging a feedstock material for vapor deposition into the charging section and vaporizing the feedstock material, decomposing the feedstock material vaporized in the vaporizing step in the decomposition oven, and polymerizing the feedstock material decomposed in the decomposing step in the polymerization section to deposit a coating film on the surface of the substrate. The vaporized feedstock material is supplied to the decomposition oven by opening the opening/closing valve to deposit the coating film.
In a further aspect, an embodiment of the present invention provides a method for chemical vapor deposition by an apparatus for chemical vapor deposition, in which the apparatus for chemical vapor deposition includes a charging section for charging a feedstock material for vapor deposition, a decomposition oven for decomposing the feedstock material, an opening/closing valve for interconnecting the charging section and the decomposition oven, and a polymerization section for polymerizing the feedstock material decomposed in the decomposition oven for depositing a coating film on a surface of a substrate. The method of an embodiment of the present invention includes the steps of charging a feedstock material for vapor deposition into the charging section, vaporizing the feedstock material, decomposing the feedstock material vaporized in the vaporizing step in the decomposition section, and polymerizing the feedstock material decomposed in the decomposing step in the polymerization section to deposit a coating film on the surface of the substrate. The film thickness of the coating film is controlled by controlling the delivery of the vaporized feedstock material to the decomposition oven using the opening/closing valve.

### Effect of the invention

In the above constitution, the charging section into which the feedstock material for vapor deposition is to be charged and the decomposition oven in which the feedstock material for vapor deposition is to be decomposed are interconnected by the opening/closing valve. Thus, the charging section may be continuously kept at a temperature state and a depressurized state of the condition for vapor deposition, independently of other sections of the apparatus. The operation for vapor deposition may thus be carried out in succession a number of times corresponding to the number of lots of the feedstock material which presents in the charging section. In other words, the time for charging the feedstock material for vapor deposition and the time for heating to the sublimation temperature in the charging section may be dispensed with, thereby reducing the time needed in carrying out a continuous operation for vapor deposition.
In addition, the film thickness of the coating film, so far controlled based on the charging volume to the charging section, may be controlled by the opening/closing valve, thereby improving reproducibility of the coating film.

### Brief Description of the Drawings

Fig.1 is a block diagram showing a constitution of an apparatus for chemical vapor deposition according to an embodiment of the present invention.
Fig.2 is a block diagram showing another constitution of an apparatus for chemical vapor deposition according to an embodiment of the present invention.
Fig.3 is a graph showing the relationship between a film thickness and the time for vapor deposition in case of using dichloro- (2,2)- paracyclophan as a feedstock material for vapor deposition.
Fig.4 is a graph showing the relationship between a film thickness and the pressure within a polymerization chamber in case of using dichloro- (2,2)-paracyclophan as a feedstock material for vapor deposition.
Fig.5 is a graph showing the relationship between the speed of vapor deposition and the temperature within a charging vessel in case of using dichloro-(2,2)- paracyclophan as a feedstock material for vapor deposition.
Fig.6 is a graph showing the relation between a film thickness and the time for vapor deposition in case of using (2,2)- paracyclophan as a feedstock material for vapor deposition.
Fig.7 is a graph showing the relationship between a film thickness and the pressure within the polymerization chamber in case of using (2,2)- paracyclophan as a feedstock material for vapor deposition.
Fig.8 is a block diagram showing a constitution of a related apparatus for chemical vapor deposition.

### Best Mode for carrying out the Invention

An embodiment of the present invention is now described in detail with reference to the drawings.

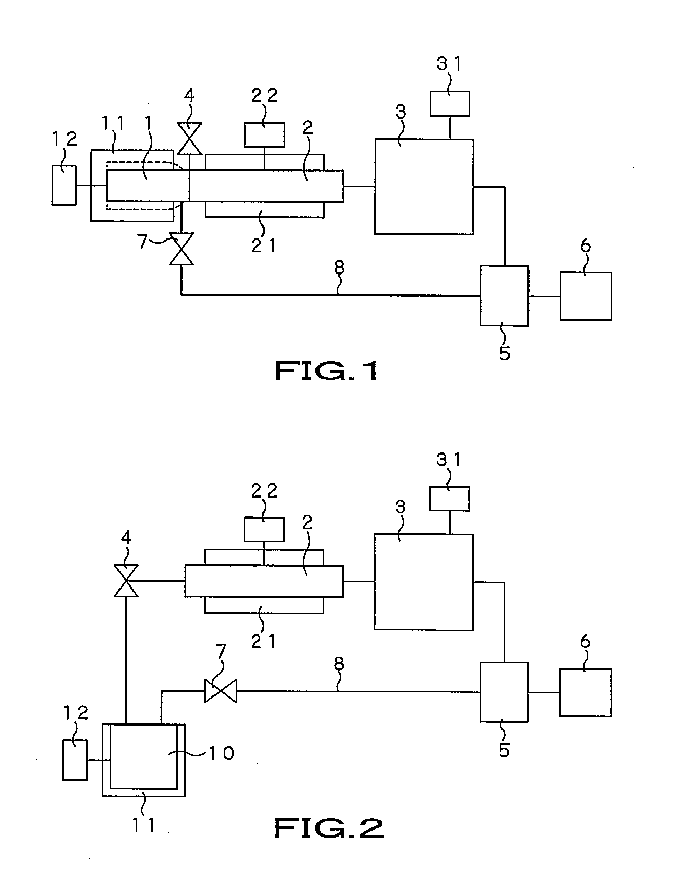

Fig.1 shows an embodiment of an apparatus for chemical vapor deposition according to an embodiment of the present invention.
The apparatus for vapor deposition includes a vaporization section 1, a decomposition oven 2 and a polymerization chamber 3. The vaporization section vaporizes a feedstock material for vapor deposition, and the decomposition oven thermally decomposes the vaporized feedstock material for vapor deposition. The thermally decomposed feedstock material for vapor deposition is polymerized in the polymerization chamber so that a coating film of the material is deposited on the substrate surface. The vaporization section 1, decomposition oven 2 and the polymerization chamber 3 are interconnected in cascade via heat-resistant piping, and an opening/closing valve 4 is provided between the vaporization section 1 and the decomposition oven 2. The polymerization chamber 3 is connected via vacuum piping (not shown) and a cooling trap 5 to a vacuum pump 6.
The vaporization section 1 and the decomposition oven 2 are formed by a sole one-piece piping. The vaporization section 1 may be slightly larger in diameter than the decomposition section as indicated by a broken line in Fig.1, if so desired. A heating oven 11 is mounted in tight contact with the outer rim of the vaporization section 1 with a temperature sensor 12 being mounted in-between. Preferably, the heating oven 11 is adapted to be heated to ca. 300°C to vaporize the feedstock material for vapor deposition.
A by-pass line 8 is connected to the vaporization section 1 via an opening/closing valve 7, whereby the vaporization section 1 is directly connected to a vacuum pump 6 via a cooling trap 5. Since vaporized impurities in the feedstock material for vapor deposition may be exhausted in this manner into the cooling trap 5, it is possible to prevent contamination of the substrate placed in the polymerization chamber 3.
The decomposition oven 2 may be constructed as conventionally. A heating oven 21 is mounted in tight contact with the outer rim of the decomposition oven 2 with a temperature sensor 22 being mounted in-between. Preferably, the heating oven 21 is adapted to be heated to ca. 1000°C to enable decomposition of the feedstock material for vapor deposition.
The polymerization chamber 3 may be constructed as conventionally, and is formed with an inner spacing large enough in size to accommodate the substrate therein. The polymerization chamber includes a pressure sensor 31 for measuring its internal pressure. The polymerization chamber also preferably includes a quartz oscillator to control the film thickness to high accuracy. Although it is sufficient in general if the inside of the polymerization chamber 3 is kept at near the ambient temperature, there may preferably be provided therein a mechanism for cooling the substrate to improve the film-forming efficiency. There may also preferably be provided a mechanism for heating the wall surface of the polymerization chamber 3 for assuring facilitated maintenance.
The opening/closing valve 4 controls the amount of supply to the decomposition oven 2 of the feedstock material for vapor deposition that has been vaporized in the vaporization section 1. The opening/closing valve 4 also controls the pressure within the polymerization chamber 3. The opening degree (conductance) of the opening/closing valve 4 has a flow coefficient (Cv value) which is high enough to deliver the feedstock material for vapor deposition into the decomposition oven 2 in an amount necessary per unit time. Specifically, the conductance (Cv value) of the opening/closing valve 4 equal to or greater than 0.4 is desirable, depending on the surface measure of the polymerization chamber 3. Since the opening/closing valve 4 is responsible for pressure control within the polymerization chamber 3, the opening/closing valve 4 is desirably a needle valve or a bellows valve having a controllable opening degree.
The opening/closing valve 4 preferably exhibits a thermal resistance of the order of 200°C. The (2,2)- paracyclophan derivative, for example, is sublimated and vaporized on heat application thereto. However, it is solidified on cooling. Hence, the internal part of the tube of the opening/closing valve 4 is heated at all times to 100°C to 200°C and preferably to 160°C to 190°C.
The material of the piping used for interconnecting the vaporization section 1 and the decomposition oven 2 or for interconnecting the decomposition oven 2 and the polymerization chamber 3 preferably exhibits sufficient resistance against heat, sufficient resistance against depressurization and sufficient acid resistance to permit use thereof for respective end-usages. The same may apply for the material of the opening/closing valve 4 as well. As for the processing for acid resistance, it is sufficient to carry out the processing only internally.
The cooling trap 5 may be of the type conventionally used. The cooling trap forces intermediates not polymerized within the polymerization chamber 3 to be cooled and thereby polymerized and collects the so polymerized intermediates to protect the vacuum pump 6. The cooling trap also collects vaporized impurities contained in the feedstock material for vapor deposition and produced on vaporization in the vaporization section 1 via the bypass line 8 to protect the vacuum pump 6. The cooling trap 5 that uses dry ice or liquid nitrogen or that has a mechanical cooling means is most preferred. The cooling temperature of the cooling trap 5 is preferably not higher than -50°C and more preferably not higher than -70°C.
The vacuum pump 6 of the same type as the related device may be used. The vacuum pump is preferably of the vacuum reached or the air volume displacement that will maintain the inside of the polymerization chamber 3 at ca. 0.1 to 2.0 Pa. Although a rotary pump, for example, is routinely used in the vacuum pump 6, a turbo molecular pump or a cryopump may also be used if a higher vacuum is desired.
The function of the opening/closing valve 7 is to remove vaporized impurities contained in the feedstock material vaporized in the vaporization section 1. It is desirable to remove the impurities whenever the feedstock material for vapor deposition is charged into the vaporization section 1. Since this allows supplying the feedstock material for vapor deposition of high purity to the polymerization chamber 3, it becomes possible to deposit the coating film of high purity. Moreover, the state of vacuum may be established in a short time by opening the opening/closing valve 7 when evacuating the vaporization section 1. The conductance and the control performance of the opening/closing valve 7 are preferably equivalent to those of the opening/closing valve 4. The by-pass line 8 is preferably as short in length as possible, and is heated if so desired.
The vacuum deposition apparatus is not limited to the above constitution. Thus, the vaporization section 1 may be designed and constructed as a charging vessel 10 as shown in Fig.2. In case the vaporization section 1 is designed and constructed as the charging vessel 10, the charging volume of the feedstock material for vapor deposition may be increased, while the by-pass line 8 may be mounted with ease. A plurality of the charging vessels 10 may also be mounted in parallel and may each be provided with the opening/closing valve 4. By so doing, if the feedstock material for vapor deposition is charged into a vessel, a coating film may be vacuum-deposited using another vessel.
There is no limitation to the capacity of the charging vessel 10. However, if the capacity is small, the number of lots that allows vapor deposition in succession without replenishing the feedstock material for vapor deposition is decreased, with the result that the merit inherent to the charging vessel is lost. If conversely the capacity is large, it becomes difficult to move or install the vessel or to replenish the feedstock material for vapor deposition. Thus, judging from the operation performance or the volume of the feedstock material used for vapor deposition, the capacity of the charging vessel 10 is preferably on the order of 0.1L to 10L.
Examples of the materials for vapor deposition charged into the vaporization section 1 or into the charging vessel 10 include (2,2)- paracyclophan derivatives, such as (2,2)- paracyclophan, dichloro-(2,2)- paracyclophan, tetrachloro-(2,2)- paracyclophan, amino-(2,2)- paracyclophan, formyl-(2,2)-paracyclophan, 1,1,9,9- tetrafluoro-(2,2) - paracyclophan or 1,1,2,2,8,8,9,9- octafluoro (2,2)- paracyclophan.
An illustrative operation of the above-described apparatus for vapor deposition proceeds in a sequence indicated in (1) to (9) below. It should be noted that, although the following description is made in connection with the constitution of the vapor deposition apparatus shown in Fig.2, this is merely illustrative and is not intended to limit the invention.
(1) Initially, the feedstock material for vapor deposition is charged into the charging vessel 10. A substrate is placed within the polymerization chamber 3.
(2) The inside of the vacuum deposition system, that is, the insides of the charging vessel 10, decomposition oven 2, polymerization chamber 3 and the cooling trap 5, are evacuated using the vacuum pump 6. It is also possible to use the by-pass line 8 for evacuation for shortening the time. When the desired vacuum is reached, the opening/closing valves 4, 7 provided on the top of the charging vessel 10 are closed to hermetically seal the charging vessel 10, which charging vessel is then heated to a predetermined temperature that allows vaporization of the material for vapor deposition.
(3) When the charging vessel 10 has reached the predetermined temperature, and the inside of the vacuum deposition system has reached a predetermined vacuum, the decomposition oven 2 is heated to the predetermined temperature.
(4) When the decomposition oven 2 has reached the predetermined temperature, the opening/closing valve 7 connected to the by-pass line 8 is opened taking care so that the measured value of the pressure sensor 31 within the polymerization chamber 3 is not in excess of a predetermined value. The vaporized impurities in the charging vessel 10 may thus be exhausted. The opening/closing valve 7 then is closed to evacuate the inside of the polymerization chamber 3 to a predetermined vacuum.
(5) When the inside of the polymerization chamber 3 has reached a predetermined pressure, the opening/closing valve 4 is opened until the measured value of the pressure sensor 31 indicates a predetermined value. The film thickness of the coating film is controlled based on the pressure indicated by the pressure sensor 31 and the time duration of opening of the opening/closing valve 4. If the desired film is extremely thin in thickness and such that fine film thickness control is desired, a film thickness monitor such as a quartz oscillator is used to control the film thickness.
(6) When the desired film thickness has been achieved after lapse of a certain time, the opening/closing valve 4 is closed to complete the polymerization.
(7) The pressure in the inside of the system except the charging vessel 10, in particular in the inside of the polymerization chamber 3, is reset to atmospheric pressure as the temperature and the vacuum in the charging vessel 10 are maintained. The gas introduced at this time into the system is preferably an inert gas, such as nitrogen.
(8) When the pressure in the inside of the polymerization chamber 3 has reached the atmospheric pressure, the substrate, carrying the film, deposited thereon, is taken out of the polymerization chamber 3. The vapor deposition now comes to a close.
(9) When the next vapor deposition is to be carried out, a new substrate is placed in the polymerization chamber 3. The pressure within the insides of the decomposition oven 2 and the polymerization chamber 3 is decreased and the opening/closing valve 4 is opened to commence a new vapor deposition processing operation.
   By providing the opening/closing valve 4 between the vaporization section 1 and the decomposition oven 2 or between the charging vessel 10 and the decomposition oven 2, the vaporization section 1 may continuously be kept at a temperature of the condition for vapor deposition and at a reduced pressure independently of the other parts of the vapor deposition apparatus. The result is that a number of times of operations equal to the number of lots of the feedstock material which presents in the vaporization section 1 or in the charging vessel 10 may be carried out in succession for vapor deposition. In other words, the time duration of vapor deposition may be shortened since the charging time of the feedstock material for vapor deposition as well as the time of heating to a sublimation temperature in the vaporization section 1 or in the charging vessel 10 may be dispensed with.
   The thickness of the coating film may be controlled based on the pressure within the polymerization chamber 3 that may be adjusted by the opening/closing valve 4 and on the opening time of the opening/closing valve 4. The thickness of the coating film may be calculated by integrating the volume of the feedstock material supplied per unit time related to the pressure within the polymerization chamber 3 and the opening time duration of the opening/closing valve 4 (time duration of vapor deposition).
   In case the vaporization section 1 is constructed as the charging vessel 10, the volume of the feedstock material for vapor deposition that may be accommodated may be increased, and hence the number of lots may be increased. By arranging a plurality of the charging vessels 10 in parallel with one another, and by providing the opening/closing valve 4 for each charging vessel, it is possible to charge the feedstock material for vapor deposition into a given vessel, as another vessel is being used for vapor-depositing the coating film.
   Further, by providing the by-pass line 8 that interconnects the vaporization section 1 or the charging vessel 10 to the cooling trap 5 and the opening/closing valve 7, the vaporized impurities contained in the feedstock material for vapor deposition may directly be exhausted to the cooling trap 5, thereby preventing contamination of the substrate placed in the polymerization chamber 3.

### Examples

Certain Examples of the vapor deposition apparatus according to the embodiment of the present invention will now be described in detail.

### Measurement of the film thickness in relation to the time duration of vapor deposition

The vapor deposition apparatus used in the following Examples 1 to 3 has the constitution shown in Fig.2. The main design parameters of the apparatus are:
a capacity of the charging vessel 10, ca. 7.2 L; a conductance of the opening/closing valve, 4, 25 mm at the maximum; a conductance of the opening/closing valve 7, 12.5 mm at the maximum; a diameter of the decomposition section 2, 50 mm; a diameter of the polymerization chamber 3 (cylindrically-shaped), 600 mm; a height, 600 mm; a vacuum reached by the vacuum pump 6, 0.29 Pa; an air displacement volume of the vacuum pump 6, 917 L/min.

The vapor deposition apparatus used in the following Comparative Examples 1 to 3 is as shown in Fig.8. That is, the apparatus is similar in constitution to the vapor deposition apparatus shown in Fig.2 except that the vaporization section 101 and the decomposition oven 102 are constituted by a common cylindrically-shaped piping. The vapor deposition apparatus of the Comparative Examples has the following main design parameters:
a diameter of each of the vaporization section 101 and the decomposition section 102, 50 mm; a diameter of the polymerization chamber 3 (cylindrically-shaped), 600 mm; a height, 600 mm; a vacuum reached by the vacuum pump 105, 0.29 Pa; an air displacement volume of the vacuum pump 105, 917 L/min.

### (Example 1)

1.36kg of dichloro- (2,2)- paracyclophan was charged in the charging vessel 10, and vacuum was set therein to 1 Pa or lower. With the opening/closing valves 4, 7 closed, the charging vessel 10 was heated to and kept at 180°C. The temperature of the decomposition oven 2 was then kept at 650°C. The opening/closing valve 4 was then opened so that the measured value of the pressure sensor 31 in the polymerization chamber 3 was kept constant at 4.0 Pa. The opening/closing valve 4 was maintained in this state for ten minutes. As a result, a monochloro-polyparaxylylene film of transparent appearance with a film thickness of 1.05 µm was produced. The film-forming speed at this time was 105 nm/min. The time duration of opening of the opening/closing valve 4 was deemed to be and used as the time duration of vapor deposition.

### (Example 2)

As in Example 1, 1.27kg of dichloro- (2,2)- paracyclophan was charged in the charging vessel 10 and the opening/closing valve 4 was opened so that the measured value of the pressure sensor 31 in the polymerization chamber 3 was constant at 4.0 Pa. The opening/closing valve was kept in this state for 60 minutes. As a result, a monochloro- polyparaxylylene film of transparent appearance with a film thickness of 5.67 µm was produced. The film-forming speed at this time was 94.5 nm/min. The time duration of opening of the opening/closing valve 4 was deemed to be and used as the time duration of vapor deposition.

### (Example 3)

As in Example 1, 0.93kg of dichloro- (2,2)- paracyclophan was charged in the charging vessel 10 and the opening/closing valve 4 was opened so that the measured value of the pressure sensor 31 in the polymerization chamber 3 was constant at 4.0 Pa. The opening/closing valve was kept in this state for 120 minutes. As a result, a monochloro- polyparaxylylene film of transparent appearance with a film thickness of 10.40 µm was produced. The film-forming speed at this time was 86.7 nm/min. The time duration of opening of the opening/closing valve 4 was deemed to be and used as the time duration of vapor deposition.

### (Comparative Example 1)

9.0g of dichloro- (2,2)- paracyclophan was charged in the vaporization section 101. The vaporization section 101 was gradually heated from 130°C to 180°C to carry out vapor deposition until depletion of the feedstock material. With the time as from start until the end of heating of the vaporization section 101 as the time duration for vapor deposition, a transparent monochloro-polyparaxylylene film with a film thickness of 1.36 µm was obtained with the time duration of vapor deposition of 65 min. It is noted that the temperature raising rate for the vaporization section 101 is the optimum speed deduced from the film quality, for instance.

### (Comparative Example 2)

As in Comparative Example 1, 50g of dichloro- (2,2)- paracyclophan was charged in the vaporization section 101. This vaporization section was gradually heated from 130°C to 180°C to carry out vapor deposition until depletion of the feedstock material. With the time as from start until the end of heating of the vaporization section 101 as the time duration for vapor deposition, a transparent monochloro- polyparaxylylene film with a film thickness of 5.0 µm was obtained with the time duration of vapor deposition of 180 min. The temperature raising rate for the vaporization section 101 is the optimum speed deduced from the film quality, for instance.

### (Comparative Example 3)

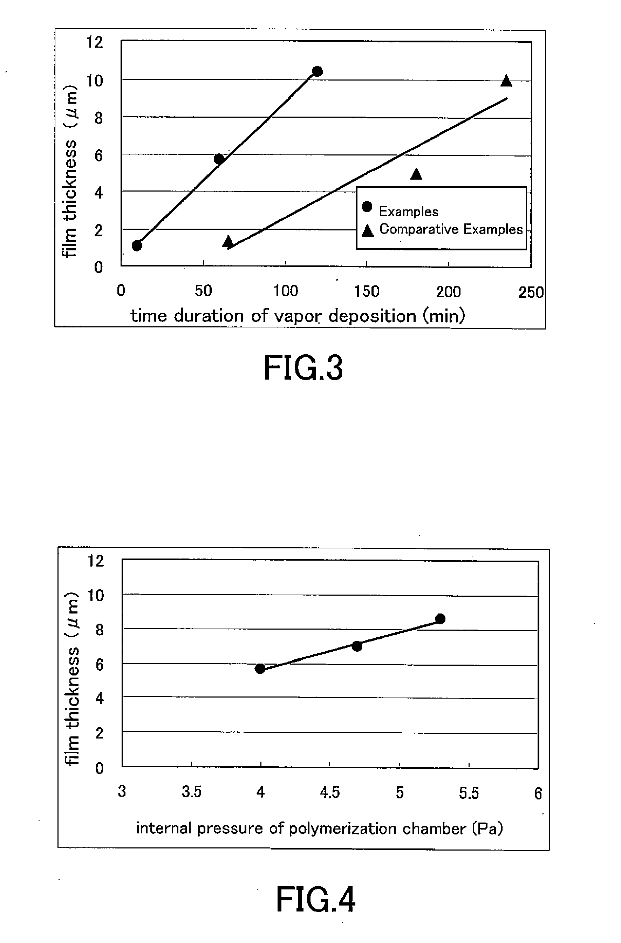

As in Comparative Example 1, 100g of dichloro- (2,2)- paracyclophan was charged in the vaporization section 101. This vaporization section was gradually heated from 130°C to 180°C to carry out vapor deposition until depletion of the feedstock material. With the time as from start until the end of heating of the vaporization section 101 as the time duration for vapor deposition, a transparent monochloro- paraxylylene film with a film thickness of 10 µm was obtained with the time duration of vapor deposition of 235 min. The temperature raising rate for the vaporization section 101 is the optimum speed deduced from the film quality, for instance.
The following Table 1 and Fig.3 show measured results of the film thickness in relation with the time duration of vapor deposition in the above Examples 1 to 3 and in the Comparative Examples 1 to 3.

**Table 1**

| | time duration of vapor deposition (min) | film thickness (µm) | speed of vapor deposition (nm/min) | appearance |
|---|---|---|---|---|
| Ex.1 | 10 | 1.05 | 105.0 | transparent |
| Ex.2 | 60 | 5.67 | 94.5 | transparent |
| Ex.3 | 120 | 10.40 | 86.7 | transparent |
| Comp. Ex.1 | 65 | 1.36 | 20.9 | transparent |
| Comp. Ex.2 | 180 | 5 | 27.8 | transparent |
| Comp. Ex.3 | 235 | 10 | 42.6 | transparent |

It is seen from the above results that, according to an embodiment of the present invention, the time for vaporization of the feedstock material may be dispensed with, and hence the time duration of vapor deposition may be appreciably shorter than with the related method. Moreover, according to an embodiment of the present invention, the coating processing for the substrate may continuously be carried out by vaporizing the feedstock material for a plurality of vapor deposition operations at the outset. In addition, the processing time for coating each substrate may be shorter. It may also be seen from Fig.3 that, in case the pressure in the polymerization chamber 3 is kept constant, the film thickness can be controlled accurately on the basis of the time duration of vapor deposition.

### Measurement of film thickness in relation to the pressure within the polymerization chamber

The apparatus for vapor deposition used in the following Examples 4 and 5 are the same as those used in the Examples 1 to 3, and the main design parameters of the apparatus are also the same.

### (Example 4)

As in Example 1, 1.17kg of dichloro- (2,2)- paracyclophan was charged into the charging vessel 10. The opening/closing valve 4 was opened so that the measured value of the pressure sensor 31 of the polymerization chamber 3 was constant at 4.7 Pa. The opening/closing valve was kept in this state for 60 minutes. As a result, a monochloro-polyparaxylylene film with transparent appearance with a film thickness of 6.89 µm was produced. The film-forming speed at this time was 116.3 nm/min.

### (Example 5)

As in Example 1, 1.07kg of dichloro- (2,2)- paracyclophan was charged into the charging vessel 10. The opening/closing valve 4 was opened so that the measured value of the pressure sensor 31 of the polymerization chamber 3 was constant at 5.3 Pa. The opening/closing valve was kept in this state for 60 minutes. As a result, a monochloro-polyparaxylylene film with transparent appearance with a film thickness of 8.60 µm was obtained. The film-forming speed at this time was 143.3 nm/min.
The results of Examples 2, 4 and 5 are shown in Fig.4. It is seen from these results that, with the constant time duration for vapor deposition, the film thickness can be controlled by controlling the pressure in the polymerization chamber 3.

### Film thickness control using film thickness gauge

The vapor deposition apparatus used in the following Example 6 is the same in constitution as the apparatus shown in Fig.2, except that a quartz oscillator (CRTM6000 manufactured by ULVAC, Inc.) is provided as a film thickness gauge within the polymerization chamber 3. The main design parameters of the apparatus of the Example 6 are:
a capacity of the charging vessel 10, ca. 300 mL; a conductance of the opening/closing valve 4, 7.8 mm at the maximum (Cv= 1.2); a diameter of the decomposition section 2, 50 mm; a diameter of the polymerization chamber 3 (cylindrically-shaped), 200 mm; a height, 230 mm; a vacuum of the vacuum pump 6 reached, 0.20 Pa; an air displacement volume of the vacuum pump 6, 275 L/min.

### (Example 6)

80g of dichloro- (2,2)- paracyclophan was charged into the charging vessel 10, the inside of which was then evacuated to a vacuum not higher than 1 Pa. With the opening/closing valve 4 closed, the charging vessel 10 was heated to 180°C and maintained at this constant temperature. The temperature of the decomposition oven 2 was then kept at 700°C, and the opening/closing valve 4 was opened so that a measured value of the film-forming speed by the quartz oscillator was constant at 5 nm/s. The opening/closing valve was closed at a time point the measured value on the quartz oscillator was 0.93 µm. The valve opening/closing time was 3 min. As a result, a monochloro-polyparaxylylene film with a film thickness of 0.95 µm was obtained.

In short, it may be seen from the Example 6 that the film thickness may be controlled with ease by using a film thickness monitor by the quartz oscillator.

### Influence of the heating temperature of the feedstock material for vapor deposition

The vapor deposition apparatus used in the following Examples 7 to 12 is the same in constitution as those shown in Fig.2, and has the following main design parameters:
a capacity of the charging vessel 10, ca. 300 ml; a conductance of the opening/closing valve 4, 7.8 mm at the maximum (Cv= 1.2); a diameter of the decomposition section 2, 25 mm; a diameter of the cylindrically-shaped polymerization chamber 3, 300 mm; a height, 400 mm; a vacuum of the vacuum pump 6 reached, 0.53 Pa; an air volume displacement of the vacuum pump 6, 428.3 L/min.

### (Example 7)

48g of dichloro- (2,2)- paracyclophan was charged into the charging vessel 10, the inside of which was then evacuated to not higher than 1 Pa. With the opening/closing valve 4 closed, the charging vessel 10 was heated to 180°C and maintained at this constant temperature. The temperature of the decomposition oven 2 was then kept at 700°C, and the opening/closing valve 4 was fully opened and kept in this state for 141 min. As a result, a monochloro-polyparaxylylene film of transparent appearance with a film thickness of 8.94 µm was obtained. The film-forming speed at this time was 63.4 nm/min.

### (Example 8)

As in Example 7, 32g of dichloro- (2,2)- paracyclophan was charged into the charging vessel 10, the inside of which was then evacuated to not higher than 1 Pa. With the opening/closing valve 4 closed, the charging vessel 10 was heated to 170°C and maintained at this constant temperature. The temperature of the decomposition oven 2 was then kept at 700°C, and the opening/closing valve 4 was fully opened and kept in this state for 106 min. As a result, a monochloro-polyparaxylylene film of transparent appearance with a film thickness of 5.77 µm was obtained. The film-forming speed at this time was 54.4 nm/min.

### (Example 9)

As in Example 7, 47g of dichloro- (2,2)- paracyclophan was charged into the charging vessel 10, the inside of which was then evacuated to not higher than 1 Pa. With the opening/closing valve 4 closed, the charging vessel 10 was heated to 160°C and maintained at this constant temperature. The temperature of the decomposition oven 2 was then kept at 700°C, and the opening/closing valve 4 was fully opened and kept in this state for 92 min. As a result, a monochloro-polyparaxylylene film of transparent appearance with a film thickness of 4.09 µm was obtained. The film-forming speed at this time was 44.5 nm/min.

### (Example 10)

As in Example 7, 36g of dichloro- (2,2)- paracyclophan was charged into the charging vessel 10, the inside of which was then evacuated to not higher than 1 Pa. With the opening/closing valve 4 closed, the charging vessel 10 was heated to 150°C and maintained at this constant temperature. The temperature of the decomposition oven 2 was then kept at 700°C, and the opening/closing valve 4 was fully opened and kept in this state for 311 min. As a result, a monochloro-polyparaxylylene film of transparent appearance with a film thickness of 6.42 µm was obtained. The film-forming speed at this time was 20.6 nm/min.

### (Example 11)

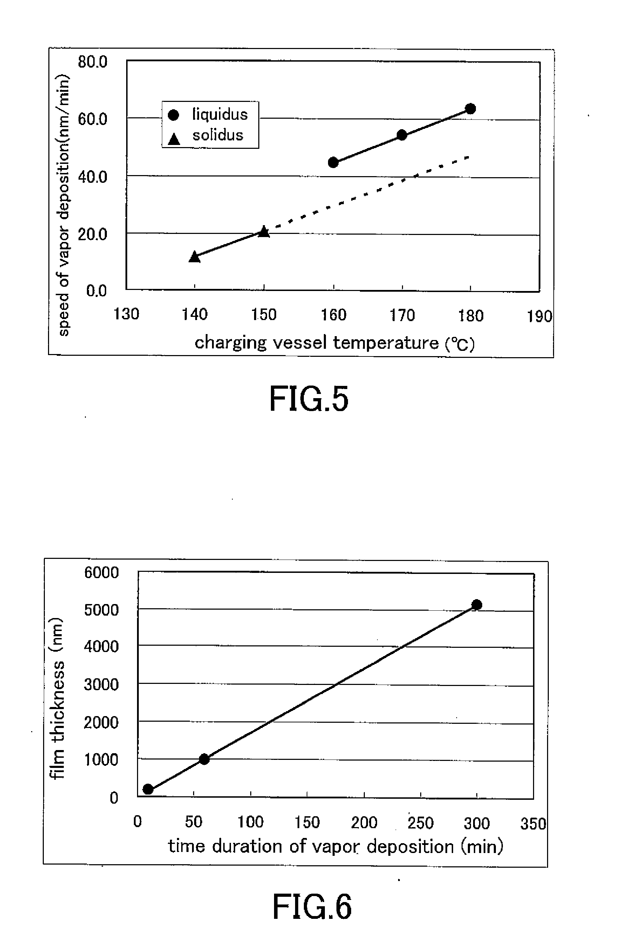

As in Example 7, 49g of dichloro- (2,2)- paracyclophan was charged into the charging vessel 10, the inside of which was then evacuated to not higher than 1 Pa. With the opening/closing valve 4 closed, the charging vessel 10 was heated to 140°C and maintained at this constant temperature. The temperature of the decomposition oven 2 was then kept at 700°C, and the opening/closing valve 4 was fully opened and kept in this state for 340 min. As a result, a monochloro-polyparaxylylene film of transparent appearance with a film thickness of 3.99 µm was obtained. The film-forming speed at this time was 11.7 nm/min.
Table 2 shows measured results of the speed of vapor deposition in relation to the charging vessel temperature of Examples 7 to 11. Fig.5 is a graph which shows the measured results of Table 2. It is noted that a broken line in Fig.5 is an extrapolation line for a case where the feedstock material for vapor deposition is supplied by sublimation from a solid substance.

**Table 2**

| | temperature of charging vessel (°C) | time duration of vapor deposition (min) | film thickness (µm) | speed of vapor deposition (nm/min) | appearance |
|---|---|---|---|---|---|
| Ex.7 | 180 | 141 | 8.94 | 63.4 | transparent |
| Ex.8 | 170 | 106 | 5.77 | 54.4 | transparent |
| Ex.9 | 160 | 92 | 4.09 | 44.5 | transparent |
| Ex.10 | 150 | 311 | 6.42 | 20.6 | transparent |
| Ex.11 | 140 | 340 | 3.99 | 11.7 | transparent |

The influence of the speed of vapor deposition on the charging vessel temperature was checked. It may be thought that dichloro- (2,2)- paracyclophan in the charging vessel in each of the Examples 7 to 9 is liquid, whereas that in each of the Examples 10 and 11 is solid. This is due to the fact that, with the opening degree of the opening/closing valve 4 being the same, dichloro- (2,2)-paracyclophan as the feedstock material for vapor deposition is more liable to be vaporized by evaporation from the liquids than by sublimation from the solids, in other words, the heat of evaporation of liquid dichloro- (2,2)- paracyclophan is lesser than the heat of sublimation of solid dichloro- (2,2)- paracyclophan.
Thus, with dichloro- (2,2)- paracyclophan as the feedstock material for vapor deposition, the speed of vapor deposition may be increased by heating the charging vessel 10 to a temperature higher than the melting point of dichloro- (2,2)-paracyclophan, that is, to a temperature not lower than 160°C. However, in consideration of possible thermal deterioration of dichloro- (2,2)- paracyclophan, the upper limit of the heating temperature is thought to be on the order of 200°C. In similar manner, with tetrachloro- (2,2)- paracyclophan having a melting point close to that of dichloro- (2,2)- paracyclophan, the speed of vapor deposition may be raised by heating the charging vessel to a temperature not lower than its melting temperature.

### Vapor deposition of a polyparaxylylene film

The vapor deposition apparatus used in the following Examples 12 to 17 is the same in constitution as that used in Comparative Example 7, and is also the same in main design parameters as the apparatus of Comparative Example 7.
The vapor deposition apparatus used in the following Comparative Example 4 is the same as that of Fig.8 used in the above Comparative Examples 1 to 3. That is, the vapor deposition apparatus of the Comparative Example 4 is similar in constitution to the apparatus shown in Fig.2 except that the vaporization section 101 and the decomposition section 102 are formed by a common cylindrically-shaped piping section. The followings are main design parameters of the vapor deposition apparatus of Comparative Example 4:
diameters of the vaporization section 101 decomposition section 102, 25 mm; a diameter of the cylindrically-shaped polymerization chamber 103, 300 mm; a height, 400 mm; a vacuum of the vacuum pump 105 reached, 0.53 Pa; an air volume displacement of the vacuum pump 105, 428.3 L/min

### (Examples 12 to 17)

(2,2)- paracyclophan was charged into the charging vessel 10 as in Example 7. The temperature of the decomposition oven 2 was kept at 650°C. The opening/closing valve 4 was operated under the conditions shown in Table 3 below to maintain the constant internal pressure in the polymerization chamber 3. As a result, a transparent polyparaxylylene film was obtained.

### (Comparative Example 4)

4g of (2,2)- paracyclophan was charged in the charging vessel 10. The vaporization section 1 was gradually heated from 130°C to 145°C to carry out vapor deposition until depletion of the feedstock material. With the time duration as from start until the end of heating of the vaporization section 2 as the time duration for vapor deposition, a transparent polyparaxylylene film with a film thickness of 1.37 µm was obtained with the time duration of vapor deposition of 510 min. It is noted that the temperature raising rate for the vaporization section 2 is the optimum speed deduced from the film quality, for instance.
Table 3 below shows the conditions for vapor deposition and the results of vapor deposition of the Examples 12 to 17 and Comparative Example 4. Fig.6 shows results of measurement of film thickness in relation to the vapor deposition time of Examples 12 to 14 and Fig.7 shows the results of measurement of the film thickness in relation to the internal pressure in the polymerization chamber in Examples 14 to 17.

**Table 3**

| | pressure of vapor deposition (Pa) | time duration of vapor deposition (min) | film thickness (nm) | speed of vapor deposition (nm/min) | appearance |
|---|---|---|---|---|---|
| Ex.12 | 8.0 | 10 | 183 | 18.3 | transparent |
| Ex.13 | 8.0 | 60 | 984 | 16.4 | transparent |
| Ex.14 | 8.0 | 300 | 5141 | 17.1 | transparent |
| Ex.15 | 4.0 | 300 | 1726 | 5.8 | transparent |
| Ex.16 | 6.0 | 305 | 2970 | 9.7 | transparent |
| Ex.17 | 10.0 | 300 | 7250 | 24.2 | transparent |
| Comp. Ex.4 | 3.0* | 510 | 1368 | 2.7 | transparent |

| | | | | | |
|---|---|---|---|---|---|
| *the figure entered is the maximum value because the pressure of vapor deposition varies in the case of the related method | | | | | |

It is seen from comparison of the Examples 12 to 17 and the Comparative Example 4 that, by dispensing with the time for vaporizing the feedstock material in the case of using (2,2)- paracyclophan as the feedstock material for vapor deposition, the time duration of vapor deposition and the tact time may appreciably be shorter than that in the case of using dichloro- (2,2)- paracyclophan. It is also seen from Fig.6 that in case the pressure within the polymerization chamber 3 is kept constant, it is possible to control the film thickness by the time duration of vapor deposition to high accuracy. It is likewise seen from Fig.7 that, with the constant time duration for vapor deposition, the film thickness may be controlled by controlling the pressure within the polymerization chamber 3.
It is further seen from the above-described Examples that according to an embodiment of the present invention, the tact time in vapor deposition of a polymer film may be decreased to a fraction of that of the related method. Moreover, according to an embodiment of the present invention, the efficiency in exploiting the feedstock material for vapor deposition is not lower that in the related method even though the tact time is shortened. Further, there is caused no change in variations of film thicknesses on the substrate surface from one location in the polymerization chamber to another. That is, the tact time may be shortened appreciably with an embodiment of the present invention, despite the fact that the film quality is equivalent or superior to that of the related system. In addition, the present invention is also economically effective in that it is only necessary to fit an opening/closing valve between the vaporization section and the decomposition section in the vapor deposition apparatus of the related system without the necessity of remodeling e.g. the polymerization chamber or the vacuum pump.

## Claims

1. An apparatus for chemical vapor deposition comprising:
a charging section for charging a feedstock material for vapor deposition;
a decomposition oven for decomposing said feedstock material;
an opening/closing valve for interconnecting said charging section and said decomposition oven; and
a polymerization section for polymerizing said feedstock material decomposed in said decomposition oven for depositing a coating film on a surface of a substrate;
wherein said feedstock material charged into said charging section is vaporized, the vaporized feedstock material is led into said decomposition oven by opening said opening/closing valve for depositing said coating film.

2. The apparatus for chemical vapor deposition according to claim 1 comprising means for collecting vaporized impurities contained in said feedstock material vaporized in said vaporization section.

3. The apparatus for chemical vapor deposition according to claim 1 wherein said charging section includes a plurality of vessels for charging said feedstock material therein; and
wherein said opening/closing valve is provided for each of said vessels.

4. An apparatus for chemical vapor deposition comprising:
a charging section for charging a feedstock material for vapor deposition;
a decomposition oven for decomposing said feedstock material;
an opening/closing valve for interconnecting said charging section and said decomposition oven; and
a polymerization section for polymerizing said feedstock material decomposed in said decomposition oven for depositing a coating film on a surface of a substrate; wherein
said feedstock material charged into said charging section is vaporized, said vaporized feedstock material is supplied into said decomposition oven in a manner controlled by said opening/closing valve to control the film thickness of said coating film.

5. The apparatus for chemical vapor deposition according to claim 4 wherein the film thickness of said coating film is controlled based on the opening/closing time of said opening/closing valve and on the pressure in said polymerization section.

6. The apparatus for chemical vapor deposition according to claim 4 wherein said polymerization section includes means for measuring the film thickness of said coating film.

7. A method for chemical vapor deposition by an apparatus for chemical vapor deposition, said apparatus for chemical vapor deposition including:
a charging section for charging a feedstock material for vapor deposition, a decomposition oven for decomposing said feedstock material, an opening/closing valve for interconnecting said charging section and said decomposition oven and a polymerization section for polymerizing said feedstock material decomposed in said decomposition oven for depositing a coating film on a surface of a substrate;
said method comprising the steps of:
charging a feedstock material for vapor deposition into said charging section and vaporizing said feedstock material;
decomposing said feedstock material vaporized in said vaporizing step in said decomposition oven; and
polymerizing said feedstock material decomposed in said decomposing step in said polymerization section to deposit a coating film on the surface of said substrate;
said vaporized feedstock material being supplied to said decomposition oven by opening said opening/closing valve to deposit said coating film.

8. The method for chemical vapor deposition according to claim 7 wherein vaporized impurities in said feedstock material produced on vaporization in said charging section are exhausted in said vaporizing step.

9. The method for chemical vapor deposition according to claim 7 wherein said feedstock material for vapor deposition is (2,2)- paracyclophan derivative.

10. The method for chemical vapor deposition according to claim 9 wherein said (2,2)- paracyclophan derivative is dichloro- (2,2)- paracyclophan or tetrachloro- (2,2)- paracyclophan.

11. The method for chemical vapor deposition according to claim 10 wherein the inside of said charging section is heated to a temperature of 160° to 200°C.

12. The method for chemical vapor deposition according to claim 7 wherein said feedstock material is heated and fused beforehand in said charging section and delivered in this fused state into said decomposition oven.

13. A method for chemical vapor deposition by an apparatus for chemical vapor deposition, said apparatus for chemical vapor deposition including:
a charging section for charging a feedstock material for vapor deposition therein, a decomposition oven for decomposing said feedstock material, an opening/closing valve for interconnecting said charging section and said decomposition oven and a polymerization section for polymerizing said feedstock material decomposed in said decomposition oven for depositing a coating film on a surface of a substrate;
said method comprising the steps of:
charging a feedstock material for vapor deposition into said charging section and vaporizing said feedstock material;
decomposing said feedstock material vaporized in said vaporizing step in said decomposition oven; and
polymerizing said feedstock material decomposed in said decomposing step in said polymerization section to deposit a coating film on the surface of said substrate;
wherein the delivery of said vaporized feedstock material into said decomposition oven is controlled using said opening/closing valve to control the film thickness of said coating film.

14. The method for chemical vapor deposition according to claim 13 wherein the film thickness of said coating film is controlled based on the opening/closing time of said opening/closing valve and on the pressure within said polymerization section.
